# EUROPÄISCHE PATENTSCHRIFT

(11) **EP 4 128 583 B1**
(45) Veröffentlichungstag und Bekanntmachung des Hinweises auf die Patenterteilung: **10.04.2024**
(21) Anmeldenummer: 21708623.0
(22) Anmeldetag: 26.02.2021
(51) Int. Cl.: H04B 10/116

(54) **EMPFÄNGER FÜR EIN SYSTEM ZUR LICHTÜBERTRAGUNG, SYSTEM ZUR LICHTÜBERTRAGUNG UND VERFAHREN ZUM BETRIEB EINES SYSTEMS ZUR LICHTÜBERTRAGUNG**
RECEIVER FOR A SYSTEM FOR LIGHT TRANSMISSION, SYSTEM FOR LIGHT TRANSMISSION AND METHOD FOR OPERATING A SYSTEM FOR LIGHT TRANSMISSION
RÉCEPTEUR POUR SYSTÈME DE TRANSMISSION DE LUMIÈRE, SYSTÈME DE TRANSMISSION DE LUMIÈRE ET PROCÉDÉ DE FONCTIONNEMENT D'UN SYSTÈME DE TRANSMISSION DE LUMIÈRE

(30) Priorität: 24.03.2020 DE 102020001892
(43) Veröffentlichungstag der Anmeldung: 08.02.2023
(73) Patentinhaber: SEW-EURODRIVE GmbH & Co. KG, 76646 Bruchsal (DE)
(72) Erfinder: DEGEN, Dirk, 76646 Bruchsal (DE); SCHMIDT, Josef, 76676 Graben-Neudorf (DE); HUA, Zhidong, 76646 Bruchsal (DE); SCHÄFER, Thomas, 76689 Karlsdorf-Neuthard (DE); LEHMANN, Philipp, 76227 Karlsruhe (DE)
(86) Internationale Anmeldenummer: PCT/EP2021/054800
(87) Internationale Veröffentlichungsnummer: WO 2021/190856

(56) Entgegenhaltungen:
- EP-A1- 2 940 902
- DE-B3-102018 006 988
- US-A1- 2004 207 104
- US-B1- 10 382 130

## Beschreibung

Die Erfindung betrifft einen Empfänger für ein System zur Lichtübertragung, umfassend eine Kamera, welche einen Bildsensor aufweist, wobei eine lichtsensitive Fläche des Bildsensors mehrere Zeilen von lichtsensitiven Elementen umfasst, wobei der Bildsensor derart ausgeführt ist, dass die lichtsensitive Fläche des Bildsensors zeilenweise oder spaltenweise abgetastet wird, und ein Vorsatzelement, welches derart angeordnet ist, dass auf die lichtsensitive Fläche des Bildsensors auftreffendes Licht zuvor das Vorsatzelement passiert. Die Erfindung betrifft auch ein System zur Lichtübertragung, umfassend einen erfindungsgemäßen Empfänger und einen Sender. Die Erfindung betrifft ferner ein Verfahren zum Betrieb eines erfindungsgemäßen Systems zur Lichtübertragung.

Aus dem Artikel "Using a CMOS Camera Sensor for Visible Light Communication", Danakis et. al., 978-1-4673-4941-3, IEEE, sind ein System und ein Verfahren zur Datenübertragung mittels sichtbarem Licht bekannt. Dabei dient eine Kamera eines Smartphones als Empfänger für sichtbares Licht. Die Kamera umfasst einen CMOS-Bildsensor, dessen lichtsensitive Fläche zeilenweise abgetastet wird. Als Sender dient eine Lichtquelle in Form einer LED, welche moduliertes Licht abstrahlt. Durch Ausnutzug des Rolling-Shutter-Effekts des CMOS-Bildsensors wird eine Datenübertragungsrate erzielt, welche größer ist als eine Bildfrequenz der Kamera.

Aus der DE 10 2018 006 988 B3 sind ebenfalls ein System und ein Verfahren zur Datenübertragung mittels sichtbarem Licht bekannt. Das System weist einen Empfänger mit einem Bildsensor, dessen lichtsensitive Fläche zeilenweise abgetastet wird, und einen Sender mit einem steuerbaren Leuchtmittel, welches moduliertes Licht abstrahlt, auf. Dabei weist der Empfänger eine Lentikularfolie oder ein Zylinderlinsenarray auf, welche zwischen einer Linse des Empfängers und dem Sender angeordnet ist. Ein auf die lichtsensitive Fläche des Bildsensors projiziertes Bild ist dabei unscharf abgebildet. Durch Ausnutzug des Rolling-Shutter-Effekts des Bildsensors wird eine erhöhte Datenübertragungsrate erzielt.

Aus dem Dokument DE 11 2006 000 484 T5 ist ein optisches System mit einer optischen Antennenanordnung, welche Beleuchtung für ein Objekt liefert, bekannt. Ein zweites optisches Antennenelement fängt einen Teil des Lichts auf, welches von dem Objekt reflektiert wird. Dabei kann die optische Antennenanordnung selektiv räumliche Stellen beleuchten, und die empfangende optische Antennenanordnung kann Licht selektiv empfangen.

Aus der US 10,382,130 B1 ist eine Kamera zur Kommunikation mit sichtbarem Licht für Fahrzeuge bekannt. Die Kamera umfasst eine Linse, die aus einem Lichtpfad zwischen einer Öffnung und einem Sensor entfernbar ist.

Aus der US 2004/0207104 A1 ist ein Verfahren zur Herstellung einer lentikularen Linsenfolie bekannt. Die Linsenfolie umfasst Vorsprünge, die mit einem lichtabsorbierenden Material beschichtet sind.

Aus der EP 2 940 902 A1 ist Verfahren zur Informationsübertragung bekannt. Dabei werden Signale durch Änderungen der Helligkeit übertragen.

Der Erfindung liegt die Aufgabe zugrunde, einen Empfänger für ein System zur Lichtübertragung, ein entsprechendes System und ein Verfahren zum Betrieb des Systems weiter zu bilden.

Die Aufgabe wird durch einen Empfänger für ein System zur Lichtübertragung mit den in Anspruch 1 angegebenen Merkmalen gelöst. Vorteilhafte Ausgestaltungen und Weiterbildungen sind Gegenstand der Unteransprüche. Die Aufgabe wird auch durch ein System zur Lichtübertragung mit den in Anspruch 10 angegebenen Merkmalen gelöst. Vorteilhafte Ausgestaltungen und Weiterbildungen sind Gegenstand der Unteransprüche. Die Aufgabe wird auch durch ein Verfahren zum Betrieb eines Systems zur Lichtübertragung mit den in Anspruch 12 angegebenen Merkmalen gelöst. Vorteilhafte Ausgestaltungen und Weiterbildungen sind Gegenstand der Unteransprüche.

Ein erfindungsgemäßer Empfänger für ein System zur Lichtübertragung umfasst eine Kamera, welche einen Bildsensor aufweist. Dabei umfasst eine lichtsensitive Fläche des Bildsensors mehrere Zeilen von lichtsensitiven Elementen. Der Bildsensor ist derart ausgeführt, dass die lichtsensitive Fläche des Bildsensors zeilenweise oder spaltenweise abgetastet wird. Der Empfänger umfasst auch ein Vorsatzelement. Das Vorsatzelement ist dabei derart angeordnet, dass auf die lichtsensitive Fläche des Bildsensors auftreffendes Licht zuvor das Vorsatzelement passiert.

Das Vorsatzelement umfasst eine Mehrzahl von streifenförmigen profilierten Bereichen und eine Mehrzahl von streifenförmigen planaren Bereichen. Dabei sind die profilierten Bereiche und die planaren Bereiche in einer Querrichtung abwechselnd angeordnet. Die profilierten Bereiche weisen in einer Vorzugsrichtung, welche rechtwinklig zu der Querrichtung verläuft, einen konstanten Querschnitt auf.

Licht, das die profilierten Bereiche des Vorsatzelements passiert, wird verhältnismäßig stark gebrochen und erzeugt ein erstes Bild auf der lichtsensitiven Fläche des Bildsensors. Das auf dem Bildsensor der Kamera erzeugte erste Bild ist daher ein unscharfes Bild. Insbesondere wird dabei ein Lichtstrahl, welcher von einer punktförmigen Lichtquelle stammt, in Form eines Leuchtstreifens abgebildet. Wenn moduliertes Licht eintrifft, so ist der besagte Leuchtstreifen in zeitlicher Abfolge hell und dunkel, in Abhängigkeit von der Modulation. Durch die zeilenweise oder spaltenweise Abtastung der lichtsensitiven Fläche des Bildsensors kann der Leuchtstreifen, in Abhängigkeit von der Modulation, somit helle und dunkele Bereiche aufweisen. Aus den hellen und dunklen Bereichen des besagten Leuchtstreifens kann ein Datenstrom detektiert werden, entsprechend welchem die Lichtquelle moduliertes Licht abstrahlt.

Licht, das die planaren Bereiche des Vorsatzelements passiert, durchdringt das Vorsatzelement zumindest annährend geradlinig und erzeugt ein zweites Bild auf der lichtsensitiven Fläche des Bildsensors. Das auf dem Bildsensor der Kamera erzeugte zweite Bild ist daher ein scharfes optisches Bild.

Durch die erfindungsgemäße Ausgestaltung des Empfängers kann somit aus dem ersten Bild ein Datenstrom mit einer Datenübertragungsrate detektiert werden, welche größer ist als eine Bildfrequenz der Kamera des Empfängers. Aus dem zweiten Bild kann ein scharfes optisches Bild detektiert werden. Vorteilhaft ist der erfindungsgemäße Empfänger somit zur schnellen Datenübertragung und auch zur gleichzeitigen Aufnahme von scharfen optischen Bildern geeignet. Dabei ist das Vorsatzelement verhältnismäßig einfach und kostengünstig herstellbar.

Gemäß einer bevorzugten Ausgestaltung der Erfindung ist das Vorsatzelement in Form einer Folie oder in Form einer Platte ausgebildet. Dabei weisen und die planaren Bereiche eine konstante Materialstärke auf. Die Folie oder die Platte ist dabei lichtdurchlässig.

Gemäß einer vorteilhaften Weiterbildung der Erfindung weisen die profilierten Bereiche Vertiefungen und somit eine geringere Materialstärke als die planaren Bereiche auf. Die profilierten Bereiche sind also konkav ausgestaltet. Dadurch wird erreicht, das die Brechung eines auftreffenden Lichtstrahls nicht überall gleich, sondern von dem Ort des Auftreffens abhängig ist. Das Vorsatzelement ist dabei besonders einfach und kostengünstig herstellbar, indem beispielsweise aus einer Folie oder aus einer Platte die Vertiefungen in Vorzugsrichtung durchgehend herausgefräst werden.

Gemäß einer anderen vorteilhaften Weiterbildung der Erfindung weisen die profilierten Bereiche Erhebungen und somit eine größere Materialstärke als die planaren Bereiche auf. Die profilierten Bereiche sind also konvex ausgestaltet. Dadurch wird erreicht, das die Brechung eines auftreffenden Lichtstrahls nicht überall gleich, sondern von dem Ort des Auftreffens abhängig ist.

Gemäß einer weiteren vorteilhaften Weiterbildung der Erfindung umfasst das Vorsatzelement profilierte Bereiche, welche Vertiefungen und somit eine geringere Materialstärke aufweisen als die planaren Bereiche und profilierte Bereiche, welche Erhebungen und somit eine größere Materialstärke aufweisen als die planaren Bereiche.

Gemäß einer vorteilhaften Ausgestaltung der Erfindung weisen die profilierten Bereiche einen zumindest annähernd halbkreisförmigen Querschnitt auf.

Gemäß einer bevorzugten Ausgestaltung der Erfindung ist eine Ausdehnung eines der planaren Bereiche in der Querrichtung größer als eine Ausdehnung eines der profilierten Bereiche in der Querrichtung. Insbesondere ist eine Ausdehnung jedes der planaren Bereiche in der Querrichtung größer als eine Ausdehnung jedes der profilierten Bereiche in der Querrichtung.

Besonders bevorzugt ist die Ausdehnung eines der planaren Bereiche in der Querrichtung mindestens doppelt so groß wie die Ausdehnung eines der profilierten Bereiche in der Querrichtung. Besonders bevorzugt ist ferner die Ausdehnung eines der planaren Bereiche in der Querrichtung höchstens zehnmal so groß wie die Ausdehnung eines der profilierten Bereiche in der Querrichtung. Insbesondere ist die Ausdehnung jedes der planaren Bereiche in der Querrichtung mindestens doppelt so groß wie die Ausdehnung jedes der profilierten Bereiche in der Querrichtung. Insbesondere ist ferner die Ausdehnung jedes der planaren Bereiche in der Querrichtung höchstens zehnmal so groß wie die Ausdehnung jedes der profilierten Bereiche in der Querrichtung.

Gemäß einer vorteilhaften Weiterbildung der Erfindung umfasst der Empfänger ferner eine Aufnahmeeinheit. Die Aufnahmeeinheit weist ein erstes Aufnahmeelement und ein zweites Aufnahmeelement, welches relativ zu dem ersten Aufnahmeelement bewegbar ist, auf. Dabei ist die Kamera in dem ersten Aufnahmeelement aufgenommen, und das Vorsatzelement ist in dem zweiten Aufnahmeelement aufgenommen. Somit ist das Vorsatzelement relativ zu der Kamera bewegbar, beispielsweise schwenkbar oder verschiebbar.

Ein erfindungsgemäßes System zur Lichtübertragung umfasst einen erfindungsgemäßen Empfänger und einen Sender, welcher mindestens eine steuerbare Lichtquelle aufweist. Die mindestens eine Lichtquelle des Senders strahlt dabei entsprechend einem vorgegebenen Datenstrom moduliertes Licht ab.

Gemäß einer vorteilhaften Ausgestaltung der Erfindung ist das Vorsatzelement des Empfängers dabei zwischen der mindestens einen steuerbaren Lichtquelle des Senders und der Kamera des Empfängers angeordnet. Somit ist sichergestellt, dass Licht, welches auf die lichtsensitive Fläche des Bildsensors der Kamera auftrifft, zuvor das Vorsatzelement passiert.

In einem erfindungsgemäßen Verfahren zum Betrieb eines erfindungsgemäßen Systems zur Lichtübertragung wird die lichtsensitive Fläche des Bildsensors zeilenweise oder spaltenweise abgetastet. Dabei wird ein erstes Bild, welches durch die profilierten Bereiche des Vorsatzelements auf die lichtsensitive Fläche projiziert wird, separat von einem zweiten Bild, welches durch die planaren Bereiche des Vorsatzelements auf die lichtsensitive Fläche projiziert wird, verarbeitet.

Gemäß einer vorteilhaften Ausgestaltung der Erfindung wird dabei aus dem ersten Bild der Datenstrom detektiert, entsprechend welchem die mindestens eine steuerbare Lichtquelle des Senders moduliertes Licht abstrahlt. Vorteilhaft ist die Datenübertragungsrate des Datenstroms dabei größer ist als eine Bildfrequenz der Kamera des Empfängers.

Gemäß einer vorteilhaften Ausgestaltung der Erfindung wird aus dem zweiten Bild ein optisches Bild detektiert. Vorteilhaft handelt es sich bei dem zweiten Bild dabei um ein scharfes optisches Bild.

Durch das erfindungsgemäße Verfahren können somit verschieden Informationen mittels des ersten Bildes und des zweiten Bildes gleichzeitig von dem Sender zu dem Empfänger übertragen und von dem Empfänger aufgenommen werden. Beispielsweise können in dem Datenstrom Koordinaten kodiert sein. Durch Auswertung des aus dem ersten Bild detektierten Datenstroms ist dann eine Ortung möglich. Durch Auswertung des zweiten Bildes kann beispielsweise ein QR-Code gescannt werden.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
- Figur 1:: eine schematische Darstellung eines Systems zur Lichtübertragung,
- Figur 2:: eine Draufsicht auf ein Vorsatzelement,
- Figur 3:: einen Schnitt durch das Vorsatzelement und
- Figur 4:: ein durch das Vorsatzelement projiziertes Gesamtbild.

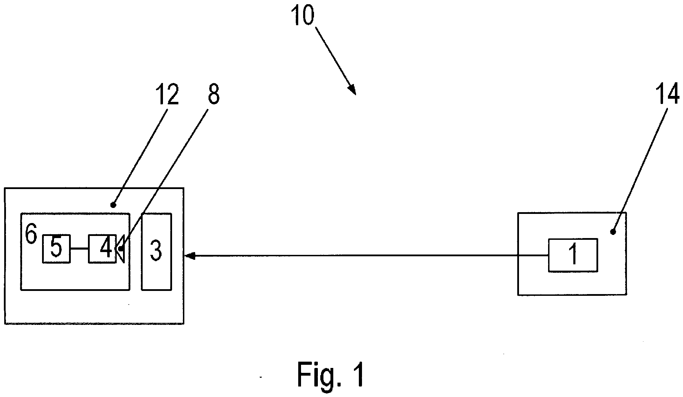

Figur 1 zeigt eine schematische Darstellung eines Systems 10 zur Lichtübertragung. Das System 10 zur Lichtübertragung umfasst einen Sender 14, welcher eine steuerbare Lichtquelle 1 aufweist. Bei der Lichtquelle 1 handelt es sich beispielsweise um eine LED, eine Deckenlampe oder einen Scheinwerfer eines Fahrzeugs. Das System 10 zur Lichtübertragung umfasst ferner einen Empfänger 12.

Der Empfänger 12 umfasst eine Kamera 6. Die Kamera 6 weist einen Bildsensor 4 auf. Der Bildsensor 4 weist eine lichtsensitive Fläche auf, die mehrere Zeilen und Spalten von lichtsensitiven Elementen umfasst. Im Betrieb der Kamera 6 wird die lichtsensitive Fläche des Bildsensors 4 zeilenweise oder spaltenweise abgetastet. Die einzelnen abgetasteten Zeilen werden anschließend zu einem Gesamtbild zusammen gesetzt. Die Kamera 6 umfasst ferner ein optisches Element in Form einer optischen Linse 8. Die Linse 8 ist dabei vor dem Bildsensor 4 angeordnet, so dass Licht, welches auf die lichtsensitive Fläche des Bildsensors 4 auftrifft, zuvor die Linse 8 passiert. Die Kamera 6 umfasst auch eine Signalelektronik 5, welche insbesondere zum Abtasten der lichtsensitiven Fläche des Bildsensors 4 dient.

Der Empfänger 12 umfasst auch ein Vorsatzelement 3. Das Vorsatzelement 3 ist derart vor dem Bildsensor 4 angeordnet, dass Licht, welches auf die lichtsensitive Fläche des Bildsensors 4 auftrifft, zuvor das Vorsatzelement 3 passiert. Das Vorsatzelement 3 ist in Form einer verhältnismäßig dünnen, lichtdurchlässigen Folie ausgebildet. Das Vorsatzelement 3 ist zwischen der Lichtquelle 1 des Senders 14 und der Kamera 6 angeordnet.

Die Kamera 6 des Empfängers 12 ist beispielsweise Teil eines handelsüblichen Mobiltelefons oder Smartphones. Der Empfänger 12 umfasst optional auch eine Aufnahmeeinheit. Die Aufnahmeeinheit ist beispielsweise ein Etui, welches ein erstes Aufnahmeelement und ein zweites Aufnahmeelement aufweist. Dabei ist das zweite Aufnahmeelement relativ zu dem ersten Aufnahmeelement bewegbar, insbesondere schwenkbar. Das Mobiltelefon mit der Kamera 6 ist in dem ersten Aufnahmeelement aufgenommen, und das Vorsatzelement 3 ist in dem zweiten Aufnahmeelement aufgenommen. Somit ist das Vorsatzelement 3 relativ zu der Kamera 6 bewegbar, beispielsweise schwenkbar oder verschiebbar. Wenn keine Datenübertragung über das System 10 gewünscht ist, so kann das Vorsatzelement 3 von der Kamera 6 entfernt werden, und die Kamera kann ein vollständiges optisches Bild ohne das Vorsatzelement 3 aufnehmen.

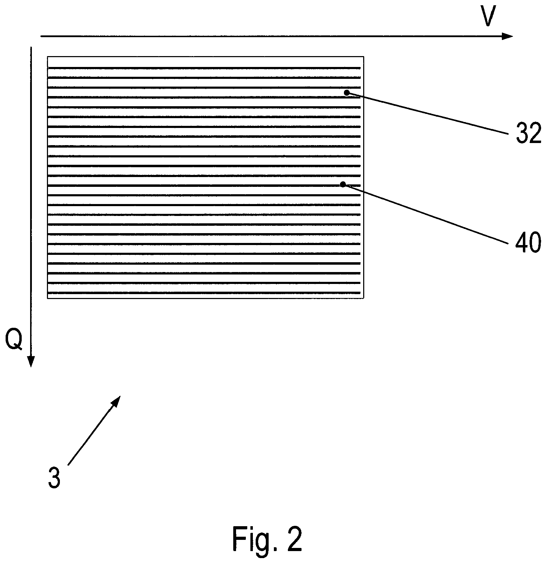

Figur 2 zeigt eine Draufsicht auf ein Vorsatzelement 3. Das Vorsatzelement 3 umfasst eine Mehrzahl von streifenförmigen profilierten Bereichen 40 und eine Mehrzahl von streifenförmigen planaren Bereichen 32. Die profilierten Bereiche 40 und die planaren Bereiche 32 sind dabei in einer Querrichtung Q abwechselnd angeordnet und parallel zu einer Vorzugsrichtung V orientiert. Die Vorzugsrichtung V verläuft dabei rechtwinklig zu der Querrichtung Q.

Die streifenförmigen profilierten Bereiche 40 des Vorsatzelements 3 sind derart ausgebildet, dass Licht, welches die profilierten Bereiche 40 passiert, verhältnismäßig stark gebrochen wird. Insbesondere wird dabei ein Lichtstrahl 60, welcher von einer punktförmigen Lichtquelle 1 stammt, in Form eines Leuchtstreifens 50, welcher in die Querrichtung Q verläuft, abgebildet. Licht, welches die profilierten Bereiche 40 des Vorsatzelements 3 passiert, erzeugt ein erstes Bild auf der lichtsensitiven Fläche des Bildsensors 4. Das erste Bild ist aufgrund der verhältnismäßig starken Brechung des Lichts unscharf.

Die planaren Bereiche 32 des Vorsatzelements 3 sind derart ausgebildet, dass Licht, welches die planaren Bereiche 32 passiert, das Vorsatzelement 3 zumindest annährend geradlinig durchdringt, also nicht oder nur unwesentlich gebrochen wird. Licht, welches die planaren Bereiche 32 des Vorsatzelements 3 passiert, erzeugt ein zweites Bild auf der lichtsensitiven Fläche des Bildsensors 4. Das zweite Bild ist ein scharfes optisches Bild.

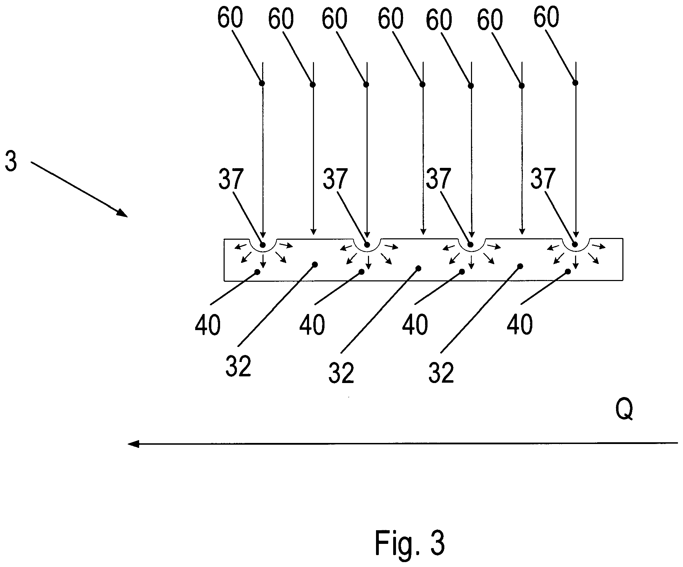

Figur 3 zeigt einen Schnitt durch das in Figur 2 gezeigte Vorsatzelement 3. Der hier gezeigte Schnitt verläuft dabei in der Querrichtung Q und rechtwinklig zu der Vorzugsrichtung V durch das Vorsatzelement 3. Die profilierten Bereiche 40 und die planaren Bereiche 32 sind, wie bereits erwähnt, in der Querrichtung Q abwechselnd angeordnet.

Die planaren Bereiche 32 des Vorsatzelements 3 weisen eine zumindest annähernd konstante Materialstärke auf. Die Materialstärke ist dabei eine Ausdehnung der Folie in einer Richtung rechtwinklig zu der Vorzugsrichtung V und rechtwinklig zu der Querrichtung Q. Somit durchdringen Lichtstrahlen 60 die planaren Bereiche 32 zumindest annährend geradlinig und werden nicht oder nur unwesentlich gebrochen.

Die profilierten Bereiche 40 des Vorsatzelements 3 weisen Vertiefungen 37 auf und sind somit konkav ausgebildet. Die profilierten Bereiche 40 weisen somit eine geringere Materialstärke auf als die planaren Bereiche 32. Die profilierten Bereiche 40 weisen dabei in der Vorzugsrichtung V durchgehend einen konstanten Querschnitt auf. Vorliegend weisen die profilierten Bereiche 40 einen annähernd halbkreisförmigen Querschnitt auf. Auf die profilierten Bereiche 40 auftreffende Lichtstrahlen 60 werden somit in Abhängigkeit von der Stelle des Auftreffens unterschiedlich stark in die Querrichtung Q gebrochen.

Es ist auch denkbar, dass die profilierten Bereiche 40 des Vorsatzelements 3 Erhebungen aufweisen und somit konvex ausgebildet sind. In diesem Fall weisen die profilierten Bereiche 40 eine größere Materialstärke auf als die planaren Bereiche 32. Der Querschnitt der profilierten Bereiche 40 kann auch von der Halbkreisform abweichen.

Eine Ausdehnung der einzelnen planaren Bereiche 32 in der Querrichtung Y ist größer als eine Ausdehnung der einzelnen profilierten Bereiche 40 in der Querrichtung Y. Vorliegend beträgt die Ausdehnung der einzelnen planaren Bereiche 32 in der Querrichtung Y etwa 4 µm, und die Ausdehnung der einzelnen profilierten Bereiche 40 in der Querrichtung Y beträgt etwa 2 µm. Die Ausdehnung der einzelnen planaren Bereiche 32 in der Querrichtung Y ist vorliegend also etwa dreimal so groß wie die Ausdehnung der einzelnen profilierten Bereiche 40 in der Querrichtung Y. Die Ausdehnung der einzelnen planaren Bereiche 32 in der Querrichtung Y sowie die Ausdehnung der einzelnen profilierten Bereiche 40 in der Querrichtung Y sollte kleiner als 1 mm sein.

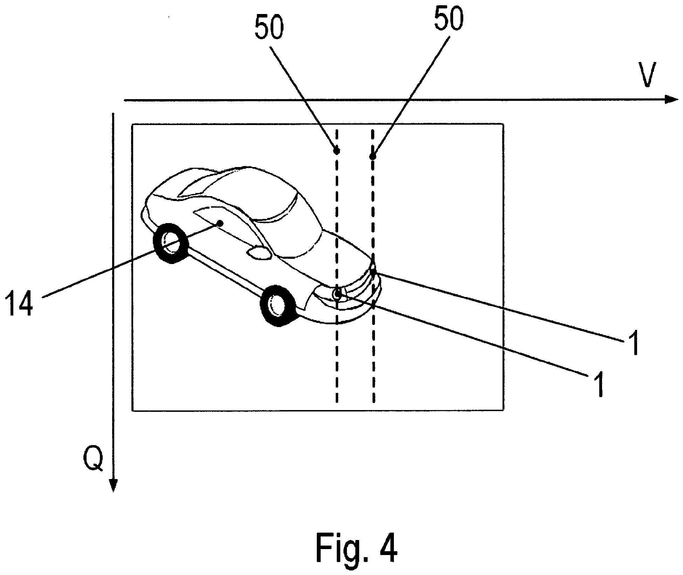

Figur 4 zeigt ein durch das in Figur 2 und Figur 3 gezeigte Vorsatzelement 3 projiziertes Gesamtbild. Bei dem Sender 14, welcher das Gesamtbild erzeugt, handelt es sich vorliegend um ein Kraftfahrzeug. Das besagte Kraftfahrzeug weist zwei Lichtquellen 1 auf, welche als Scheinwerfer ausgebildet sind. Die beiden Lichtquellen 1 sind als annähernd punktförmig anzusehen.

Das besagte Gesamtbild umfasst ein erstes Bild, welches von Licht erzeugt wird, das die profilierten Bereiche 40 des Vorsatzelements 3 passiert. Das Gesamtbild umfasst auch ein zweites Bild, welches von Licht erzeugt wird, das die planaren Bereiche 32 des Vorsatzelements 3 passiert.

Das von einer der Lichtquellen 1 ausgestrahlte Licht, welches auf einen Teil eines profilierten Bereichs 40 des Vorsatzelements 3 trifft, wird gebrochen und in Form eines Leuchtstreifens 50 abgebildet. Die von den beiden Lichtquellen 1 erzeugten Leuchtstreifen 50 erstrecken sich dabei in die Querrichtung Q.

Das von den übrigen Teilen des Senders 14 ausgestrahlte Licht, welches rechtwinklig auf einen planaren Bereich 32 des Vorsatzelements 3 trifft, durchdringt das Vorsatzelement 3 zumindest annährend geradlinig. Dadurch entsteht ein zweites Bild. Das zweite Bild ist dabei ein scharfes optisches Bild.

Das zweite Bild zeigt auch verhältnismäßig dünne Streifen mit verringerter Helligkeit, welche sich in die Vorzugsrichtung V erstrecken. Diese Streifen werden durch Teile der profilierten Bereiche 40 des Vorsatzelements 3 erzeugt, auf welche kein Licht der Lichtquellen 1 trifft. Die besagten Streifen sind jedoch verhältnismäßig dünn und daher in dem Gesamtbild kaum sichtbar. Somit ist der Sender 14, vorliegend ein Kraftfahrzeug, in dem Gesamtbild deutlich erkennbar.

### Bezugszeichenliste

- 1: Lichtquelle
- 3: Vorsatzelement
- 4: Bildsensor
- 5: Signalelektronik
- 6: Kamera
- 8: Linse
- 10: System
- 12: Empfänger
- 14: Sender
- 32: planarer Bereich
- 37: Vertiefung
- 40: profilierter Bereiche
- 50: Leuchtstreifen
- 60: Lichtstrahl
- Q: Querrichtung
- V: Vorzugsrichtung

## Patentansprüche

1. Empfänger (12) für ein System (10) zur Lichtübertragung, umfassend
eine Kamera (6), welche einen Bildsensor (4) aufweist, wobei
eine lichtsensitive Fläche des Bildsensors (4) mehrere Zeilen von lichtsensitiven Elementen umfasst, wobei
der Bildsensor (4) derart ausgeführt ist, dass
die lichtsensitive Fläche des Bildsensors (4) zeilenweise oder spaltenweise abgetastet wird, und ein Vorsatzelement (3), welches derart angeordnet ist, dass
auf die lichtsensitive Fläche des Bildsensors (4) auftreffendes Licht zuvor das Vorsatzelement (3) passiert, wobei
das Vorsatzelement (3) eine Mehrzahl von streifenförmigen profilierten Bereichen (40) umfasst, und
die profilierten Bereiche (40) in einer Vorzugsrichtung (V), welche rechtwinklig zu einer Querrichtung (Q) verläuft, einen konstanten Querschnitt aufweisen,
**dadurch gekennzeichnet, dass**
das Vorsatzelement (3)
eine Mehrzahl von streifenförmigen planaren Bereichen (32)
umfasst, und dass
die profilierten Bereiche (40) und die planaren Bereiche (32) in der Querrichtung (Q) abwechselnd angeordnet sind.

2. Empfänger (12) nach Anspruch 1, **dadurch gekennzeichnet, dass**
das Vorsatzelement (3) in Form einer Folie oder in Form einer Platte ausgebildet ist, wobei die planaren Bereiche (32) eine konstante Materialstärke aufweisen.

3. Empfänger (12) nach Anspruch 2, **dadurch gekennzeichnet, dass**
die profilierten Bereiche (40) Vertiefungen (37) und eine geringere Materialstärke aufweisen als die planaren Bereiche (32).

4. Empfänger (12) nach Anspruch 2, **dadurch gekennzeichnet, dass**
die profilierten Bereiche (40) Erhebungen und eine größere Materialstärke aufweisen als die planaren Bereiche (32).

5. Empfänger (12) nach Anspruch 2, **dadurch gekennzeichnet, dass**
das Vorsatzelement (3)
profilierte Bereiche (40), welche Vertiefungen (37) und eine geringere Materialstärke aufweisen als die planaren Bereiche (32) und
profilierte Bereiche (40), welche Erhebungen und eine größere Materialstärke aufweisen als die planaren Bereiche (32),
umfasst.

6. Empfänger (12) nach einem der vorangegangenen Ansprüche,
**dadurch gekennzeichnet, dass**
die profilierten Bereiche (40) einen zumindest annähernd halbkreisförmigen Querschnitt aufweisen.

7. Empfänger (12) nach einem der vorangegangenen Ansprüche,
**dadurch gekennzeichnet, dass**
eine Ausdehnung eines der planaren Bereiche (32) in der Querrichtung (Y) größer ist als eine Ausdehnung eines der profilierten Bereiche (40) in der Querrichtung (Y).

8. Empfänger (12) nach einem der vorangegangenen Ansprüche,
**dadurch gekennzeichnet, dass**
die Ausdehnung eines der planaren Bereiche (32) in der Querrichtung (Y) mindestens doppelt so groß ist wie die Ausdehnung eines der profilierten Bereiche (40) in der Querrichtung (Y),
und/oder dass
die Ausdehnung eines der planaren Bereiche (32) in der Querrichtung (Y) höchstens zehnmal so groß ist wie die Ausdehnung eines der profilierten Bereiche (40) in der Querrichtung (Y).

9. Empfänger (12) nach einem der vorangegangenen Ansprüche,
ferner umfassend eine Aufnahmeeinheit,
**dadurch gekennzeichnet, dass**
die Aufnahmeeinheit ein erstes Aufnahmeelement und ein zweites Aufnahmeelement, welches relativ zu dem ersten Aufnahmeelement bewegbar ist, aufweist, wobei
die Kamera (6) in dem ersten Aufnahmeelement aufgenommen ist, und
das Vorsatzelement (3) in dem zweiten Aufnahmeelement aufgenommen ist.

10. System (10) zur Lichtübertragung, umfassend
einen Empfänger (12) nach mindestens einem der vorangegangenen Ansprüche und
einen Sender (14), welcher mindestens eine steuerbare Lichtquelle (1) aufweist, welche entsprechend einem vorgegebenen Datenstrom moduliertes Licht abstrahlt.

11. System (10) nach Anspruch 10, **dadurch gekennzeichnet, dass**
das Vorsatzelement (3) zwischen der mindestens einen steuerbaren Lichtquelle (1) und der Kamera (6) angeordnet ist.

12. Verfahren zum Betrieb eines Systems (10) zur Lichtübertragung nach einem der Ansprüche 10 bis 11, **dadurch gekennzeichnet, dass**
die lichtsensitive Fläche des Bildsensors (4) zeilenweise oder spaltenweise abgetastet wird,
wobei
ein erstes Bild, welches durch die profilierten Bereiche (40) des Vorsatzelements (3) auf die lichtsensitive Fläche projiziert wird, separat von
einem zweiten Bild, welches durch die planaren Bereiche (32) des Vorsatzelements (3) auf die lichtsensitive Fläche projiziert wird,
verarbeitet wird.

13. Verfahren nach Anspruch 12, **dadurch gekennzeichnet, dass**
aus dem ersten Bild der Datenstrom detektiert wird, entsprechend welchem die mindestens eine steuerbare Lichtquelle (1) des Senders (14) moduliertes Licht abstrahlt.

14. Verfahren nach einem der Ansprüche 12 bis 13, **dadurch gekennzeichnet, dass**
aus dem zweiten Bild ein optisches Bild detektiert wird.

## Claims

1. Receiver (12) for a light transmission system (10), comprising
a camera (6) having an image sensor (4),
a light-sensitive area of the image sensor (4) comprising a plurality of rows of light-sensitive elements,
the image sensor (4) being configured such that
the light-sensitive area of the image sensor (4) is scanned row by row or column by column, and
an add-on element (3), which is arranged such that
light impinging on the light-sensitive area of the image sensor (4) passes through the add-on element (3) first,
the add-on element (3) comprising a plurality of strip-shaped profiled regions (40), and
the profiled regions (40) having a constant cross section in a preferential direction (V), which extends at right angles to a transverse direction (Q),
**characterised in that**
the add-on element (3) comprises a plurality of strip-shaped planar regions (32), and **in that** the profiled regions (40) and the planar regions (32) are arranged alternately in the transverse direction (Q).

2. Receiver (12) according to claim 1,
**characterised in that**
the add-on element (3) is configured in the form of a film or in the form of a plate, the planar regions (32) having a constant material thickness.

3. Receiver (12) according to claim 2,
**characterised in that**
the profiled regions (40) have recesses (37) and a lower material thickness than the planar regions (32).

4. Receiver (12) according to claim 2,
**characterised in that**
the profiled regions (40) have bulges and a greater material thickness than the planar regions (32).

5. Receiver (12) according to claim 2,
**characterised in that**
the add-on element (3) comprises profiled regions (40) that have recesses (37) and a lower material thickness than the planar regions (32), and
profiled regions (40) that have bulges and a greater material thickness than the planar regions (32).

6. Receiver (12) according to any of the preceding claims,
**characterised in that**
the profiled regions (40) have an at least approximately semicircular cross section.

7. Receiver (12) according to any of the preceding claims,
**characterised in that**
an extent of one of the planar regions (32) in the transverse direction (Y) is larger than an extent of one of the profiled regions (40) in the transverse direction (Y).

8. Receiver (12) according to any of the preceding claims,
**characterised in that**
the extent of one of the planar regions (32) in the transverse direction (Y) is at least twice as large as the extent of one of the profiled regions (40) in the transverse direction (Y),
and/or **in that**
the extent of one of the planar regions (32) in the transverse direction (Y) is at most ten times as large as the extent of one of the profiled regions (40) in the transverse direction (Y).

9. Receiver (12) according to any of the preceding claims,
further comprising a supporting unit,
**characterised in that**
the supporting unit has a first supporting element and a second supporting element, which is movable relative to the first supporting element,
the camera (6) being supported in the first supporting element, and
the add-on element (3) being supported in the second supporting element.

10. Light transmission system (10) comprising
a receiver (12) according to at least one of the preceding claims and
a transmitter (14), which has at least one controllable light source (1) that radiates modulated light in accordance with a predetermined data stream.

11. System (10) according to claim 10,
**characterised in that**
the add-on element (3) is arranged between the at least one controllable light source (1) and the camera (6).

12. Method for operating a light transmission system (10) according to any of claims 10 to 11,
**characterised in that**
the light-sensitive area of the image sensor (4) is scanned row by row or column by column, a first image projected onto the light-sensitive area by the profiled regions (40) of the add-on element (3) being processed separately from a second image projected onto the light-sensitive area by the planar regions (32) of the add-on element (3).

13. Method according to claim 12,
**characterised in that**
the data stream is detected from the first image, the at least one controllable light source (1) of the transmitter (14) radiating modulated light in accordance with said data stream.

14. Method according to any of claims 12 to 13,
**characterised in that**
an optical image is detected from the second image.

## Revendications

1. Récepteur (12) pour un système (10) de transmission de lumière, comprenant
une caméra (6) présentant un capteur d'images (4), où
une surface sensible à la lumière du capteur d'images (4) comprend plusieurs lignes d'éléments sensibles à la lumière, où
le capteur d'images (4) est mis en oeuvre de telle manière que la surface sensible à la lumière du capteur d'images (4) est balayée ligne par ligne ou colonne par colonne, et un élément optique (3) qui est agencé de telle manière que
la lumière arrivant sur la surface sensible à la lumière du capteur d'images (4) traverse d'abord l'élément optique (3), où
l'élément optique (3) comprend une pluralité de régions profilées (40) en forme de bande, et
les régions profilées (40) présentent une section transversale constante dans une direction préférentielle (V) qui s'étend à angle droit par rapport à la direction transversale (Q),
**caractérisé en ce que**
l'élément optique (3) comprend une pluralité de régions planes (32) en forme de bande, et **en ce que**
les régions profilées (40) et les régions planes (32) sont agencées de manière alternée dans la direction transversale (Q).

2. Récepteur (12) selon la revendication 1, **caractérisé en ce que**
l'élément optique (3) est réalisé sous la forme d'une feuille ou sous la forme d'une plaque, où les régions planes (32) présentent une épaisseur de matériau constante.

3. Récepteur (12) selon la revendication 2, **caractérisé en ce que**
les régions profilées (40) présentent des renfoncements (37) et une épaisseur de matériau inférieure à celle des régions planes (32).

4. Récepteur (12) selon la revendication 2, **caractérisé en ce que**
les régions profilées (40) présentent des surélévations et une épaisseur de matériau supérieure à celle des régions planes (32).

5. Récepteur (12) selon la revendication 2, **caractérisé en ce que**
l'élément optique (3) comprend
des régions profilées (40) qui présentent des renfoncements (37) et une épaisseur de matériau inférieure à celle des régions planes (32) et
des régions profilées (40) qui présentent des surélévations et une épaisseur de matériau supérieure à celles des régions planes (32).

6. Récepteur (12) selon l'une quelconque des revendications précédentes, **caractérisé en ce que**
les régions profilées (40) présentent une section transversale au moins approximativement semi-circulaire.

7. Récepteur (12) selon l'une quelconque des revendications précédentes, **caractérisé en ce que**
une extension de l'une des régions planes (32) dans la direction transversale (Y) est supérieure à une extension de l'une des régions profilées (40) dans la direction transversale (Y).

8. Récepteur (12) selon l'une quelconque des revendications précédentes, **caractérisé en ce que** l'extension de l'une des régions planes (32) dans la direction transversale (Y) est au moins deux fois supérieure à l'extension de l'une des régions profilées (40) dans la direction transversale (Y), et/ou **en ce que**
l'extension de l'une des régions planes (32) dans la direction transversale (Y) est au plus dix fois supérieure à celle de l'une des régions profilées (40) dans la direction transversale (Y).

9. Récepteur (12) selon l'une quelconque des revendications précédentes, comprenant en outre une unité d'enregistrement,
**caractérisé en ce que**
l'unité d'enregistrement présente un premier élément d'enregistrement et un deuxième élément d'enregistrement pouvant être déplacé par rapport au premier élément d'enregistrement, où
la caméra (6) est accueillie dans le premier élément d'enregistrement, et
l'élément optique (3) est accueilli dans le deuxième élément d'enregistrement.

10. Système (10) de transmission de lumière, comprenant
un récepteur (12) selon au moins l'une quelconque des revendications précédentes et un émetteur (14) qui présente au moins une source de lumière commandable (1) émettant de la lumière modulée en fonction d'un flux de données prédéfini.

11. Système (10) selon la revendication 10, **caractérisé en ce que**
l'élément optique (3) est agencé entre la au moins une source de lumière commandable (1) et la caméra (6).

12. Procédé de fonctionnement d'un système (10) de transmission de lumière selon l'une quelconque des revendications 10 à 11, **caractérisé en ce que**
la surface sensible à la lumière du capteur d'images (4) est balayée ligne par ligne ou colonne par colonne, où
une première image projetée à travers les régions profilées (40) de l'élément optique (3) sur la zone sensible à la lumière est traitée séparément d'une deuxième image projetée à travers les régions planes (32) de l'élément optique (3) sur la zone sensible à la lumière.

13. Procédé selon la revendication 12, **caractérisé en ce que**
le flux de données en fonction duquel la au moins une source lumineuse commandable (1) de l'émetteur (14) émet une lumière modulée est détecté à partir de la première image.

14. Procédé selon l'une quelconque des revendications 12 à 13, **caractérisé en ce qu'**une image optique est détectée à partir de la deuxième image.
